# EUROPEAN PATENT SPECIFICATION

(11) **EP 3 916 523 B1**
(45) Date of publication and mention of the grant of the patent: **02.07.2025**
(21) Application number: 20176851.2
(22) Date of filing: 27.05.2020
(51) Int. Cl.: G06F 3/01, G06F 3/0346, H02N 15/00, B60K 35/00, B60R 11/00, B60R 25/24, B60R 16/037, B60K 35/10, B60K 35/29

(54) **SYSTEM, FLOATING DEVICE, AND A VEHICLE**
SYSTEM, SCHWEBENDE VORRICHTUNG UND FAHRZEUG
SYSTÈME, DISPOSITIF FLOTTANT ET VÉHICULE

(43) Date of publication of application: 01.12.2021
(73) Proprietor: Bayerische Motoren Werke Aktiengesellschaft, 80809 München (DE)
(72) Inventor: Iliffe-Moon, Etienne, Menlo Park, 94025 (US); Mantovani, Francesco, Redwood City, CA 94063 (US); Mok, Brian, Santa Clara, 95050 (US)

(56) References cited:
- EP-A1- 2 824 896
- EP-A1- 3 157 157
- EP-A1- 3 671 718
- DE-A1- 102014 200 035
- KR-A- 20170 129 012

## Description

### Field

Examples relate to a system comprising a floating input device for a user, and a base element for the floating input device. The system can be used in a vehicle, for example. Further examples relate to a vehicle comprising a system with a floating user device and a base element, and to a floating device.

### Background

In modern vehicles, a growing number of functionalities is often provided in addition to classic driving functions. All functionalities of the vehicle (e.g. a car) such as air conditioning, seat adjustment, information and entertainment system or the like need to be operated and adjusted by a user of the vehicle. In order to reduce the number of user input devices for the various functions of the vehicle, central user input devices can be used instead of separate input devices for every single function. However, controlling different functionalities may require different input options of a user input device, e.g. for better usability. Therefore, demands on central input devices are high.

Input devices, e.g. physical interaction devices to be used by the user like buttons or switches, are often limited to operating to a plane or axis of operation (e.g. a computer mouse operates on a two dimensional plane of a table or desk, a rotary knob (or controller) operates about a single axis, etc.). Other physical interaction devices work on a limited degree of three dimensional freedom, such that they can be rotated, pushed/pulled and/or tilted within a certain limit of motion.

EP 0 515 858 A2 discloses an input-output system for computer user interface using active magnetic levitation. The input-output system has a multiple degree-of-freedom magnetic levitation (maglev) device with a matched electro dynamically levitated flotor and stator combination and an electrodynamic forcer means for receiving coil currents for applying controlled magnetic forces mutual to the flotor and stator. A sensing means measures the relative position and orientation of the flotor and stator. This input-output system may enable higher freedom of motion of the input device, however, due to the use of the stator and flotor, the system is bulky and the free moving space of the flotor is highly limited due to the surrounding stator.

EP 2 824 896 A1 discloses a mobile terminal dance method, where a first magnet is set at the bottom of a mobile terminal, the mobile terminal is placed in a base, and the base is set with a second magnet with a polarity opposite to a polarity of the first magnet; when a preset triggering condition is met, the mobile terminal sends a first control signal to control the polarity of the first magnet, such that the first magnet produces a polarity identical to the polarity of the second magnet.

KR 2017 0129012 A relates to a controller using a magnetic levitation principle. The controller using a magnetic levitation principle according to an embodiment of the present invention comprises: a jog shuttle including a first magnetic part; and a jog shuttle pad including a second magnetic part corresponding to the first magnetic part, wherein the jog shuttle can be magnetically levitated on the jog shuttle pad by the first magnetic part and the second magnetic part.

EP 3 157 157 A1 discloses a system for levitating a mobile terminal, comprising: a levitation unit mounted on a rear surface of the mobile terminal; and a levitation module configured to generate an electromagnetic force to allow the levitation unit to levitate upward, wherein the levitation unit includes a mounting case attachably detachably coupled to the rear surface of the mobile terminal and a first permanent magnet seated on an inside of the mounting case, wherein the levitation module includes: a housing; a cover that covers the housing; a magnet module disposed in the housing to form an electromagnetic field for levitating the levitation unit; and a PCB that includes a control unit connected to the magnet module to control a current supplied to the magnet module, wherein the magnet module includes a plurality of electromagnets that generate an electromagnetic field for making a repulsive force act on the first permanent magnet, and a second permanent magnet that surrounds the exterior of the plurality of electromagnets and generates a magnetic field for allowing an attractive force to act on the first permanent magnet.

DE 10 2014 200035 A1 discloses a device for holding an object in a vehicle comprises a device. The device is designed to generate a force. The force is at least partially opposed to a gravitational force acting on the object in such a way that the object is held in a position relative to the device by the force without contact.

### Summary

There may be a desire for improved concepts for user devices and systems with user devices that enable to receive user input and/or give user output.

The invention is defined by the subject-matter of the independent claims. Further examples of the proposed concepts are described in the dependent claims, the following description and in combination with the figures.

Examples of the present disclosure relate to a system comprising a floating device and a base element for the floating device. The floating device is configured as at least one of an input device or an output device for a user interface. For example, the floating device may be an input/output device. The system is configured to maintain the floating device in a balanced position above the base element in a first operational mode, and to locate the floating device in a docking position on a top side or surface of the base element in a second operational mode.

For example, the floating device configured as input/output user device may be used in a vehicle. The floating device may be described as user device or user controller, for example. The increasing number of different functionalities in modern vehicles may be controlled by the floating device (e.g. provided as a central user device). The balanced position may be a levitating position, for example, such that the floating device can be moved in any direction. For example, the floating device may be a multiple degree-of-freedom input device that may be operable by at least one of rotating, tilting, moving, pushing, touching, tapping, placing, removing (e.g. if the floating device has an access function), reaching towards (e.g. proximity), etc. for example. The floating device may improve a functionality of a user interaction system, e.g. due to multi modal user feedback and/or the possibility for multi modal user input.

The floating device may be particularly well suitable for use in vehicles due to the provided docking mode, for example. In the docking position, the floating device may be positioned at the base element, e.g. fixed to the base element. The docking position may be a position in which the floating device may maintain a physical contact with the base element (e.g. with a larger contact area compared to a contact area while the floating device is operated in the balanced position). For example, due to the provided docking position, it may be possible to meet regulatory requirements for user devices in a car.

Further examples of the present disclosure relate to a vehicle comprising a user interface and a system with a floating device and a base element. The system is configured to control the operational mode of the floating device depending on a movement of the vehicle. Controlling the operational mode based on the movement of the car may enable to meet regulatory requirements, for example. It may be possible to operate the floating device in the balanced position while the vehicle is standing, for example for providing full functionality of the user input/output device. For example, while the car is moving, the floating device may be operated in the docking position, e.g. to improve a functionality of keeping the floating device within a predefined distance to the base element. For example, in the docking position the input functionality may be reduced compared to the floating position, e.g. the floating device may be rotated and/or pushed for receiving user input.

Further examples of the present disclosure relate to a floating device for an input/output system for a user interface. The floating device comprises a magnet element which is arranged circularly in the floating device, and an output element. An upper portion of the floating device is cone-shaped and the output element is provided at the cone-shaped portion. Providing the output element, e.g. a display or the like, at the upper cone-shaped portion may improve the visibility of the output element for a user, for example. Especially in vehicles, the floating device may be positioned next to a user, so that the output element may be better perceived by the user when it is positioned on a sloped side portion of the floating device, for example.

### Brief description of the Figures

Some examples of apparatuses and/or methods will be described in the following by way of example only, and with reference to the accompanying figures, in which
- Figs. 1a, 1b: show a schematic example of a system with a base element and a floating device in a floating position and in a docking position;
- Fig. 2: shows a schematic example of a vehicle comprising an input/output system with a floating device;
- Fig. 3: shows a floating device and a base element with mating elements for contacting each other in the docking position;
- Figs. 4a, 4b: show a schematic example of a floating device in a non-balanced position and in a balanced position;
- Figs. 5a - 5c: show an example of a system with an electromechanical actuator;
- Figs. 6a - 6c: show an example of a base element with a cradle for the floating device; and
- Figs. 7a - 7b: show an example of a floating device with output elements.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

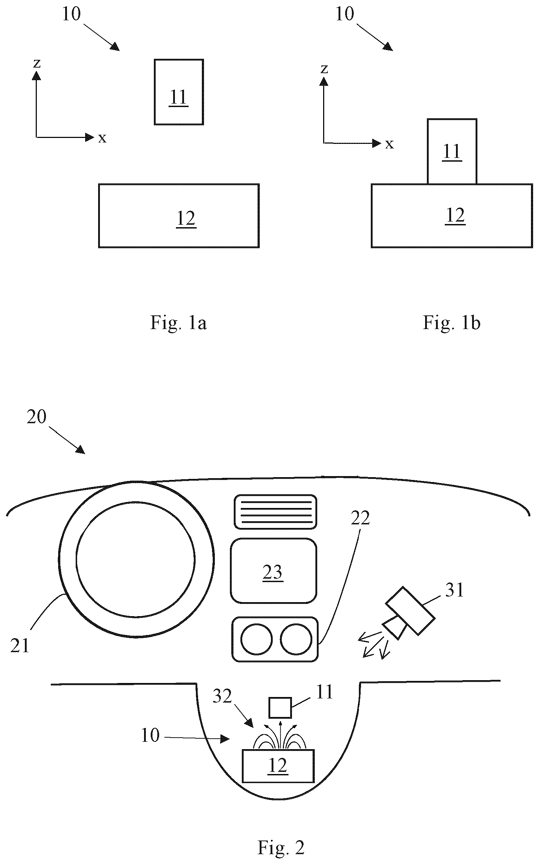

Fig. 1a shows a schematic example of a system 10 with a base element 12 and a floating device 11 in a balanced levitating position. Fig. 1b shows a schematic example of the system 10 and in a docking position.

The presented system 10 comprises a floating device 11 which is configured as at least one of an input device or an output device for a user interface (e.g. a user input device or a user output device for user interaction with a system). The system 10 further comprises a base element 12 for the floating device 11. The system 10 is configured to maintain the floating device 11 in a balanced position above the base element 12 in a first operational mode (see e.g. Fig. 1a), and to locate the floating device 11 in a docking position on a top side of the base element 12 in a second operational mode (see e.g. Fig. 1b). As the system 10 may be turned by 180° for example, it may be as well possible to operate the floating device 11 below the base element 12 in the balanced position, e.g. to provide a user device at a bottom side of an object.

The floating device 11 may be described as a user device or a user controller, for example. For example, the floating device 11 may be an input/output device. A user interface may be used for any system a user can interact with. For example, such systems may be provided in vehicles, e.g. an entertainment system or an information system.

The floating device 11 may enable improved usability of a user interaction system for the user, for example. For example, in the balanced position, the floating device 11 may be levitated above the base element 12. In a levitation mode, the user can move (e.g. push, lift, drop, rotate, tilt, etc.) the floating device 11 in any direction which can improve the possibility to give user input, for example. Further, there may be elements provided at the floating device 11 that can directly give output to the user (e.g. by use of a light element, a display, haptic feedback, etc.), e.g. as a feedback function.

In the balanced position, the floating device 11 may provide improved usability while the docking position may enable to more securely hold or maintain the floating device 11 next to the base element 12. Locating the floating device 11 in the docking position may comprise exerting a force (e.g. mechanical force; e.g. magnetic force) on the floating device 11 so that it can be kept located in the docking position. Within the docking position, the floating device 11 may still provide input functionality (e.g. the floating device 11 may be movable also in the docking position; for example the degree-of-freedom to move the floating device 11 for giving user input or output in the docking position may be reduced compared to the balanced position; e.g. it may be possible to rotate the floating device in the docking position like a dial or a regular rotating switch).

Alternatively, it may be possible that the floating device 11 is fixed to the base element 12 in the docking position (e.g. non-movable). Locating the floating device 11 in the docking position may comprise physically holding (e.g. grasping) the floating device 11. For example, a connection between the floating device 11 and the base element 12 may be stable in the docking position (e.g. more stable than in the balanced position).

By providing the balanced position and the docking position, the floating device 11 may be well suitable for use within vehicles, for example. For example, for the use in a vehicle (e.g. a car), both a high degree-of-freedom functionality of a user input/output device as well as a stable location of the user input/output device may be required. The proposed floating device 11 may meet these requirements, for example.

For example, the balanced position may be a position in which a part of the floating device 11 is in physical contact with the base element 12 or in which the floating device 11 is levitating above (or below) the base element 12. The levitating position is shown in Fig. 1a, for example. The floating device 11 may have a form which does not allow a stable position of the floating device, e.g. without external exertion of force on the floating device 11, for example. Whereas in a non-balance operation mode the floating device 11 may perform uncontrolled movements (unstable condition), it may be kept in a defined position in the balanced position, for example. In the balanced position, the floating device 11 may be positioned above or below the base element 12 (e.g. suspended), for example.

The base element 12 and the floating device 11 may comprise an information transmitting system, e.g. a wireless transmitting system, configured to send data between the base element 12 and the floating device 11, for example. User input data may be sent from the floating device 11 to the base element 12 and output data may be sent from the base element 12 to the floating device 11, for example.

For example, the wireless transmitting system may enable that the floating device 11 may be removed from the (e.g. magnetic) base element 12 by a user and thereby may effectively become a remote control (e.g. a controller with a 3D surface) that can be moved in free space, for example. Providing the possibility of using the floating device 11 also in greater distance of the base element 12 (e.g. outside the magnetic field of the base element 12) may broaden the usability of the floating device 11 for the user. For example, in autonomous cars the floating device 11 may be used on the base element 12 or remotely from the base element 12 in different situations (e.g. autonomous driving mode or manual driving mode).

The system 10 comprises a magnetic system. For maintaining the floating device 11 in the balanced position, the magnetic system may be arranged in the base element 12 and the floating device 11, for example.

The magnetic system may be configured to hold the floating device in the balanced position. For example, the floating device 11 may comprise a magnet (e.g. permanent magnet) that interacts with a magnetic field generated by the base element 12. By adjustment of the magnetic field (e.g. by using a controller of the base element 12 or the system 10) a position of the floating device 11 may be controlled. For example, controlling the position of the floating device 11 may comprise controlling an orientation of the floating device 11, controlling a distance between the floating device 11 and the base element 12 and/or controlling a movement of the floating device 11 (e.g. altering a levitation height of the floating device 11; e.g. providing haptic feedback to a user by vibration of the floating device 11).

According to an example, the system 10 may further comprise an electromechanical actuation unit. For example, the magnetic system may comprise an electromagnetic coil being positioned in the base element 12, and the electromechanical actuation unit may be configured to alter a position of the electromagnetic coil within the base element 12. By adjusting a position of the electromagnetic coil, a levitation height of the floating device 11 may be controlled or adjusted, for example. Using the electromechanical actuation unit for controlling the levitation height may be easier than controlling the magnetic field, for example.

As described above, the balanced position may be a levitating position. The system 10 may be configured to levitate the floating device 11 in the balanced position within a range defined by a minimal distance (e.g. levitation height) of at least 1 mm (or at least 5 mm, at least 10 mm or at least 20 mm) and/or of at most 100 mm (or at most 80 mm, at most 60 mm or at most 30 mm) between the base element 12 and the floating device 11. For example, smaller distances between the floating device 11 and the base element 12 may reduce a complexity of a system to levitate the floating device 11 (e.g. the magnetic system) whereas a greater distance may increase a freedom of movement of the floating device 11 (e.g. for user input; e.g. the user may push the floating device down along a greater distance for controlling parameters of a system).

The system 10 may further comprise a fixing means configured for retaining or fixing the floating device 11 to the base element 12 in the docking position. The fixing means may be used to exert stronger forces to the floating device 11, e.g. to increase a stability of the position of the floating device 11 in the docking position. However, it may still be possible to move the floating device 11 in the docking position, e.g. the fixing means can be a magnetic system configured to magnetically attract the floating device 11 to the base element 12 while still enabling a rotation of the floating device 11 on the base element 12, for example.

For example, the fixing means may comprise an electromagnet and/or a permanent magnet and/or a mechanical fixing means and/or an electromechanical system. The magnetic system may be used to pull the floating device 11 from the balanced position into the docking position where it interacts with a mechanical click mechanism so that it can be more securely fixed in the docking position.

For example, the electromechanical system may comprise a lock bar (which is e.g. electromechanically operable) configured to more firmly connect the floating device with the base element.

For example, the base element 12 may comprise a mating element for the floating device 11 configured to receive the floating device 11 in the docking position. The mating element and a bottom of the floating device may be designed to fit together positively, e.g. to mechanically engage and/or increase surface friction (or contact area), etc. For example, in the docking position there may be a form fit between the floating device 11 and the base element 12. The form fit may increase a stability of the connection between the floating device 11 and the base element 12 in the docking position, for example. A first mating element may be a notch (e.g. V-shaped or U-shaped), for example, and a second mating element may be a bulge formed as a counterpart to the notch. For example, the notch may be provided at the base element 12.

For example, the system 10 may be configured to measure a change of position of the floating device 11 and/or a change of orientation and/or a change of motion of the floating device 11 relative to the base element 12 for detection of a user input. The user may alter a height of the floating device 11, tilt the floating device 11 in any direction and/or rotate the floating device 11, for example, to give user input.

For example, the floating device 11 may comprise a touch control element and/or a proximity sensor and/or an optical sensor and/or a sound sensor and/or a temperature sensor and/or a bio sensor and/or an inertial measurement unit for detection of a user input. A plurality of different user input sensors may allow multi modal user input due to the floating device 11, for example. For example, an optical sensor (e.g. camera, e.g. time of flight camera, IR sensor, etc. to help with figuring out position or orientation relative to the base 12) may be located in the floating device 11 or in the base 12 or in the surrounding environment (e.g. optical sensors (e.g. camera, LIDAR, etc.) that may be located in the cabin of a vehicle, e.g. in the ceiling/headliner).

For example, the floating device 11 may comprise a display and/or a touchscreen display and/or a light source element and/or a speaker and/or a haptic actuator and/or or a thermal device for the provision of an output to a user. The floating device 11 may be a multi modal user device, for example.

For example, the system 10 may further comprise an optical sensor positioned separated from the floating device 11 and configured to detect a position and/or an orientation of the floating device 11 relative to the base element 12. The optical sensor may be used to detect a movement of the floating device 11, for example triggered by a user. For example, the user may have the possibility to alter a position of the floating device 11 (e.g. push it down or pull it upward) to give user input.

For example, the system 10 may further comprise a wireless charging system configured to charge a battery of the floating device 11 at least in the docking position. The floating device 11 may comprise a rechargeable battery as energy storage, for example. The wireless charging system may be configured to charge the battery in the balanced position as well. Further it may be possible to charge the device by use of an electromechanical connection (e.g. wired electrical contact).

For example, the system 10 may further comprise a wireless energy transmission system configured to transmit electromagnetic energy from the base element 12 to the floating device 11 to operate the floating device 11. It is possible to provide a separate accessory, e.g. a charging cradle (docking station) that may be movable (e.g. for use of the floating device 11 at home instead of within a vehicle), for example. For example, by use of the wireless energy transmission system no battery may be needed in the floating device 11 as the floating device 11 may be powered directly by the base element 12. For example, this may enable to design smaller and lighter floating devices 11. For example, an inductive power supply may provide a combination of power to recharge the battery and/or directly power the floating device 11.

For example, the system 10 may be configured to electromagnetically control a rotational movement of the floating device 11. For example, the system 10 may be configured to manipulate the floating device 11. For example, it may be possible to rotate the floating device 11, provide indexing (e.g. controlled rotation per index), and/or provide resistance to prevent or impede rotation or motion (e.g. to enable moving the floating device 11 with a predefined force only), etc. The manipulation of the floating device 11 may be achieved by use of the magnetic system, for example.

For example, the system 10 may be configured to enable wireless data communication between the floating device 11 and the base element 12 and/or the vehicle (e.g. by use of Wi-Fi, Bluetooth, near field communication etc.).

The system 10 with the floating device 11 may bring particular benefits for usage in a vehicle like a car, for example. For example, the system 10 may enable to remove, place/replace the device 11 (e.g. swap the device 11 by different users), and/or unique devices for different users, etc. Compared to other user devices, the high degree-of-freedom level for user input may be combined with the usability in vehicles, e.g. due to the presence of a defined docking position and a relatively small size of the floating device 11.

The floating device 11 may be configured to be removed and replaced by the user, for example. For example, the user may place the floating device on the platform (e.g. the base element 12), e.g. to activate the system or place it in the floating position. An enhancement of stability may be achieved due to at least one of mechanical constraint, servomechanism, Halbach array, or rotational stability, for example. For example, different devices (e.g. two or more floating devices 11) may be provided with similar or different functionality of features.

Fig. 2 accordingly shows a schematic example of a vehicle 20 comprising an input/output system 10 with a floating device 11. The dashboard of the vehicle 20 is presented. The vehicle 20 comprises a user interface and a system 10 as described above or below. The system 10 is configured to control the operational mode of the floating device 11 depending on a movement of the vehicle 20.

For example, the system 10 may operate the floating device 11 in a first operational mode, e.g. balancing or levitating, when the vehicle 20 moves, and in a second operational mode, e.g. in a docking position, when the vehicle 20 is stopped. Alternatively, the operational mode may be chosen vice versa, e.g. depending on requirements on the system 10. For example, the balanced mode may be chosen for vehicle speed up to 5 km/h (or 15 km/h) and the docking position may be chosen above a vehicle speed of 5 km/h (or 15 km/h) or under certain conditions (e.g. vehicle cornering, braking, crash collision (e.g. airbag deployment), etc.). For example, in autonomously driving cars it may be possible to operate the floating device 11 in balanced mode while the car is moving.

For example, the floating device 11 of the system 10 may comprise a specific identification feature and the vehicle 20 may be configured to detect the specific identification feature of the floating device 11. For example, the vehicle 20 may be configured to control an availability of usable functions of the vehicle 20 depending on the specific identification feature of the floating device 11. The floating device 11 may be used as a key or an access device to enable the use of specific functions of the vehicle 20, for example. It may be possible to provide the vehicle 20 with two different floating devices 11 (e.g. for a first user and a second user) so that the first user may have different functional options compared to the second user. For example, the floating device 11 may be used for controlling internal car features only, but not access to the car.

In Fig. 2, the dashboard of the vehicle 20 shows a steering wheel 21, control buttons 22 (e.g. rotating switches), and a user display 23. The system 10 may comprise a magnetic system to enable the balanced position of the floating device (e.g. levitating the floating device 11) by use of a magnetic field 32. Further, a camera device 31 is provided to enable measuring a position of the floating device 11, e.g. in relation to the base element 12.

For example, the floating device 11 may be used to control functions displayed at the user display 23. The floating device 11 may enable 3D interactive user experience, e.g. to improve a connection between a physical space and a virtual space. For example, a reproduction of the floating device 11 may be displayed on the display 23 including the present position and orientation of the floating device 11 to increase the connection between real world and virtual reality (VR) or augmented reality (AR), for example. Due to the haptic 3D experience and the projected virtual reproduction, the user interaction may be improved, for example by connecting visual and haptic features.

The camera 31 may detect which user of the car uses the floating device 11, for example. The driver may control different functions by using the floating device 11 than a co-driver, for example. Depending on a direction of approach of a user's hand, different functions may be displayed on the display 23 for the corresponding user, for example. For example, when the co-driver approaches the floating device 11, the system 10 may rotate the floating device 11 to orient the floating device 11 (e.g. a specific output element of the floating device 11) towards the co-driver, e.g. to enable better usability of the floating device 11 to the co-driver.

When the system 10 is used in a vehicle 20, additional data may be used: For example, the dynamics of the vehicle (e.g. acceleration, braking, cornering, orientation, etc.) may be used to control the system 10. The floating device 11 may be used to control and compensate for the vehicle and adapt sensor information on the floating device. User information (e.g. seat occupancy, user identification, user state, etc.) may be used for the interactive user system. Safety events (e.g. data that primes and actuates seat belt tensioning, air bag, etc.) may be included, for example.

More details and aspects of the concept are mentioned in connection with the proposed concept or one or more examples described above or below (e.g. Figs. 1a to 1b and 3 to 7b). The concept may comprise one or more additional optional features corresponding to one or more aspects of the proposed concept or one or more examples described above or below.

A further aspect relates to a floating device 11 for an input/output system 10 for a user interface. The floating device 11 may comprise a magnet element which is arranged circularly in the floating device 11 (e.g. a ring magnet), and an output element. An upper portion of the floating device 11 is cone-shaped or inclined and the output element is provided at the cone-shaped or inclined portion.

For example, the floating device 11 may have a maximal height of at most 10 cm (or at most 7 cm, at most 5 cm or at most 3 cm) and/or of at least 1 cm (or at least 2 cm or at least 3 cm). For example, the floating device may have a maximal diameter of at most 10 cm (or at most 7 cm, at most 5 cm or at most 3 cm) and/or of at least 1 cm (or at least 2 cm or at least 3 cm). For example, the size of the floating device 11 may be large enough to give a good handling to a user and small enough for suitable use in vehicles.

More details and aspects of the concept are mentioned in connection with the proposed concept or one or more examples described above or below (e.g. Figs. 1a to 7b). The concept may comprise one or more additional optional features corresponding to one or more aspects of the proposed concept or one or more examples described above or below.

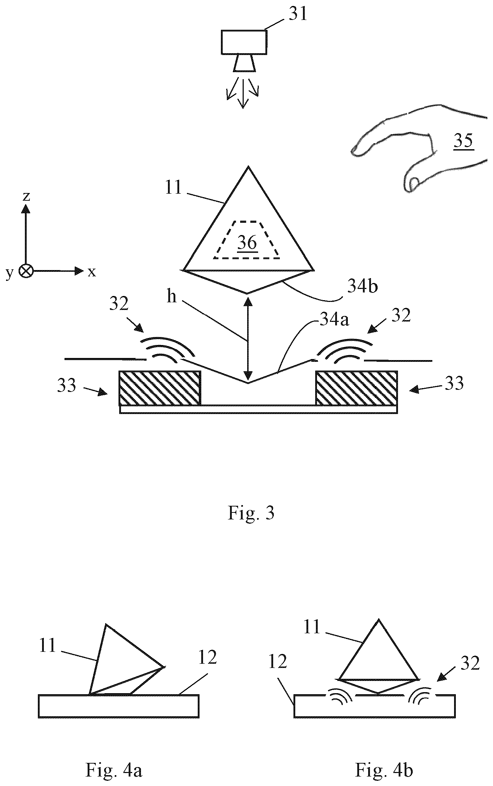

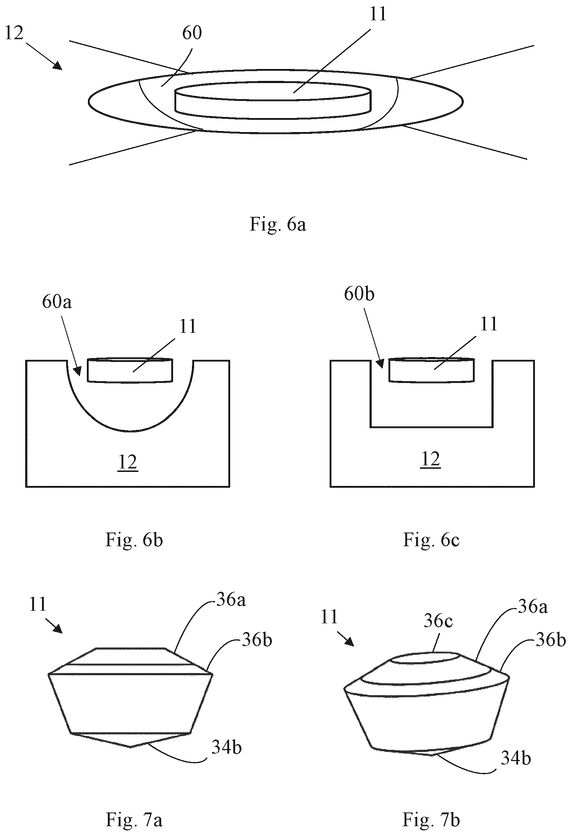

Fig. 3 shows a floating device 11 and a base element 12 with mating elements for contacting each other in the docking position. A first mating element 34a at the base element 12 is a V-shaped notch. The counterpart at the floating device 11, a second mating element 34b, is also V-shaped to enable a form fit with the first mating element 34a when located in the docking position on the base element 12. A more detailed view of a floating device 11 that can be used is given in combination with Figs. 7a and 7b, for example.

The base element 12 shown in Fig. 3 comprises a magnetic system with coils 33 generating a magnetic field 32 to maintain the floating device 11 in a balanced position. Here, the balanced position is a levitating position. A levitation height h may be controlled by the system 10, e.g. by controlling strength and/or orientation and/or position of the magnetic field 32. The levitation height h may be variable.

A user 35 may manipulate, e.g. move (e.g. rotate, push or the like) the floating device 11 to give user input to a system. The high degree-of-freedom movability of the floating device 11 may enable movements in all directions (e.g. x/y/z direction) as well as rotating (e.g. in the x/y plane) or tilting (e.g. with respect to the z-axis). An output element 36 of the floating device 11 may give output to the user 35. The output element 36 is positioned at an upper inclined portion of the floating device 11 so that a user looking at the floating device 11 from above at an angle can better perceive the content of the output element 36, for example. A camera device 31 may be provided to detect a movement of the floating device 11, e.g. triggered by the user 35. The camera device 31 may be used as proximity sensor to detect a position of the user 35 (e.g. hand of the user 35) close to the floating device 11. For example, in a proximity operational mode, the magnetic system may move the floating device 11 to maintain a predefined distance between the user 35 and the floating device 11 (e.g. distance of 1 cm, of 2 cm or of 5 cm). In other words, the system 10 may be configured to let the floating device 11 follow a user's movement, for example. The system 10 may further be configured to resist (e.g. counteract) the movement of the device 11 by the user.

More details and aspects of the concept are mentioned in connection with the proposed concept or one or more examples described above or below (e.g. Figs. 1a to 2 and 4a to 7b). The concept may comprise one or more additional optional features corresponding to one or more aspects of the proposed concept or one or more examples described above or below.

Figs. 4a and 4b show a schematic example of a floating device in a non-floating position (Fig. 4a) and in a balanced position (Fig. 4b). In the non-floating or non-balanced position, the floating device 11 is located in an unstable position on the base element 12 (e.g. rolling around). When the magnetic field 32 is activated, the floating device 11 may be brought into the balanced position (e.g. balancing on a corner of the floating device 11 which is in contact with the base element 12).

For example, a wake up function may be enabled by use of a proximity sensor. When an approach of the user 35 to the floating device 11 is detected, the system 10 may switch the operational mode to bring the floating device 11 from the docking position to the balanced position.

More details and aspects of the concept are mentioned in connection with the proposed concept or one or more examples described above or below (e.g. Figs. 1a to 3 and 5a to 7b). The concept may comprise one or more additional optional features corresponding to one or more aspects of the proposed concept or one or more examples described above or below.

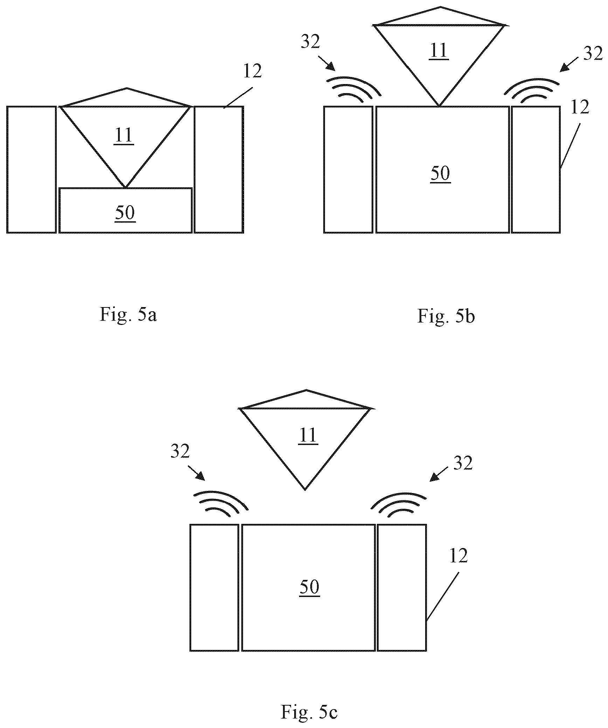

Figs. 5a - 5c show an example of a system with an electromechanical actuator 50 which may be included in the base element 12. The electromechanical actuator 50 may be configured to move (e.g. elevate) the floating device 11 and/or the electromagnetic coils 33 of the base element 12 mechanically.

Fig. 5a shows the floating device 11 in the docking position. In the docking position, the electromechanical actuator 50 may be retracted in the base element 12 to receive the floating device 11 at least partly in the base element 12. In Fig. 5b, the electromechanical actuator 50 may be extended and the system 10 maintains the floating device 11 in the balanced position by use of the magnetic field 32 (e.g. first operational mode). Further, e.g. in a third operational mode, the floating device 11 may be levitated to a first height (e.g. shown in Fig. 5c). Further, e.g. in a fourth operational mode, the floating device 11 may be levitated to an altered second height, for example.

By combination of electromechanical and magnetic actuation, the levitation may be variable, for example. The floating device 11 may be docked (e.g. physically contacting; e.g. held in place), balancing (e.g. a point contact, balanced in equilibrium) and/or floating (e.g. levitating). The electromechanical actuation may physically separate the magnetic sub-system from the physical support (e.g. docking) of the floating device 11. The magnetic actuation may be further comprised of a permanent magnet and electro magnet subsystems. For example, the magnetic polarity of the sub-systems may be reversed to either lock the floating device 11 in a docked position (e.g. to prevent theft, or as a safety mechanism such as in the event of strong accelerations in a car); to float - e.g. levitate; and/or to stabilize the floating device 11, e.g. to maintain a state of equilibrium (e.g. balance, float, resist, etc.) against external forces (e.g. exerted by a user, gravity, vehicle acceleration, etc.)

More details and aspects of the concept are mentioned in connection with the proposed concept or one or more examples described above or below (e.g. Figs. 1a to 4b and 6a to 7b). The concept may comprise one or more additional optional features corresponding to one or more aspects of the proposed concept or one or more examples described above or below.

Figs. 6a - 6c show an example of a base element with a cradle 60 for the floating device. For example, the system 10 may be configured to position the floating device 11 at least partly in the cradle 60 when operated in the balanced position mode.

Fig. 6b shows a side view of a U-shaped cradle 60a with a levitated floating device 11 inside the cradle. Fig. 6c shows a side view of a rectangular shaped cradle 60b with a levitated floating device 11 inside the cradle. Positioning the floating device 11 in the cradle 60 may result in the possibility of using less complex magnetic systems for balancing the floating device 11, for example.

More details and aspects of the concept are mentioned in connection with the proposed concept or one or more examples described above or below (e.g. Figs. 1a to 5c). The concept may comprise one or more additional optional features corresponding to one or more aspects of the proposed concept or one or more examples described above or below.

Figs. 7a and 7b show an example of a floating device 11 with a number of output elements 36a, 36b, 36c on the upper side and top of the floating device 11. Two output elements 36a, 36b may be ring-shaped input/output elements (e.g. touch screen elements) which are arranged circumferentially on a sloping upper side of the floating device 11. A third output element 36c (e.g. a touch screen element as well) is circular shaped and arranged centrally at the top of the floating device 11. The different elements may improve the usability of the floating device 11 for the user, for example.

More details and aspects of the concept are mentioned in connection with the proposed concept or one or more examples described above or below (e.g. Figs. 1a to 6c). The concept may comprise one or more additional optional features corresponding to one or more aspects of the proposed concept or one or more examples described above or below.

An example relates to a system comprising a floating device configured as at least one of an input device or an output device for a user interface. The floating device may comprise a magnet, e.g. provided in a ring-formed arrangement. The system may further comprise a base element for the floating device and a controller, wherein the base element may comprise an electromagnetic coil configured to generate a magnetic field for at least balancing the floating device. The controller may be configured to control the magnetic field in order to adjust a balancing position of the floating device. In addition or alternatively, the controller may be configured to control an electromechanical unit of the system configured to alter a position of the electromagnetic coil, to adjust the balancing position. When being operated in the balancing position, the floating device may touch the base element or may levitate above the base element. The controller may be configured to alter a distance between the floating device and the base element, e.g. a minimal distance may be varied between at least 5 mm (or at least 10 mm) and at most 50 mm (or at most 40 mm).

More details and aspects of the concept are mentioned in connection with the proposed concept or one or more examples described above or below (e.g. Figs. 1a to 7b). The concept may comprise one or more additional optional features corresponding to one or more aspects of the proposed concept or one or more examples described above or below.

Examples relate to a floating user interaction device, e.g. a multi-axis multi-sensory user interaction device (e.g. the floating device; e.g. a balance device that can be operated in a balanced position and/or a levitation device that can be operated in a levitating position).

Other interaction devices may be limited with respect to their operation functionalities. Proposed examples may enable a desirable and iconic element within the interior of a vehicle.

The element may have a jewel like shape and specific quality. Some technological components or mechanisms may be hidden from the view of the user, e.g. enabling a high quality user experience when touched and operated. Sensor technology (e.g. RGB cameras, IR cameras, Lidar, etc.), has progressed such that it may be possible to precisely monitor actions, interactions and behaviors of users and objects (e.g. the floating device) (e.g. the position, orientation, motion, state, events, proximity, touch, manipulation, gesture, etc.) between a user and the object. Also, computer processing technology has progressed which can enable the analysis of sensor data to further understand the state and intent of users, objects around them and the environment surrounding them, and, for example, to further adapt those objects and environments in response.

Compared to other concepts, the proposed floating device may have advantages especially in the context of vehicles. For example, the floating device applied to a vehicle may give distinctive opportunity to: e.g. multiple users (e.g. left vs. right passenger); e.g. controlled cabin environment for multi-sensory experience; e.g. to leverage vehicle data and sub-systems; e.g. requirements such as theft security and safety can be addressed with the control of magnetic sub-systems; e.g. an interactive and multi-sensory/multi-modal interface onboard the floating device may be provided, including: user control input via touch, gesture and manipulation and/or graphical display and/or illumination and/or audio speaker and/or microphone and/or haptic actuator.

Proposed concepts may provide an inside-out sensing approach: For example, onboard sensors e.g. IMU (inertial measurement unit, e.g. gyroscope, accelerometer, etc.) may provide precise information on the position, orientation and motion of the object (e.g. the floating device). Information on a combination of: the physical status of the object, user touch (e.g. moment of touch, touch and touch gesture sensing (e.g. like a touch-screen display) and/or the manipulation of the object by a user may be provided.

Proposed concepts may provide outside-in sensing provides approach: It may be possible to provide data redundancy with inside-out sensing approach to minimize errors and provide information that reveals user context, intent and informs machine learning aspects, for example. A camera based approach may sense: The status of the object, a manipulation of the object, and or a user context relative to the object. This may be achieved e.g. without touching the object - e.g. proximity and approach of the user, identification of the user (e.g. left or right passenger dependent on the approach angle, seat occupancy, etc.), by touch (e.g. without significant manipulation of the object) and/or by manipulation (e.g. moving the object).

Proposed examples may enable multisensory experiences by specifically choreographing multiple sensory inputs between users and their objects and environment (e.g. the overall cabin experience) across time. For example, using magnets and magnetic levitation, electro-magnetics and sensing technology in new ways to create dynamic sensations and multi-layered interactions (e.g. motion, haptic, force feedback, etc.) relative to an interactive artefact or element (e.g. jewel, object, floating device, etc.) that has many degrees of freedom (e.g. less constraints to conventional interaction devices).

In addition to providing merely aesthetical components, proposed examples provide devices that are dynamic and interactive at the same time (e.g. from user experience, user interaction, symbolic, etc. points of view). Proposed concepts may enable premium user devices for improved usability, for example.

Proposed concepts may be used for delivering a sensation to the user via the object (e.g. the floating device 11) - e.g. by engaging the senses of the user (e.g. seeing, hearing, touching, motion (proprioception), temperature, etc.). Controlling magnetic balancing and/or levitation may be provided. For example, it may be possible to raise and lower the floating device 11 (object) (e.g. not just suspend/float an object in a static position), control the motion (e.g. 3-dimensional position (XYZ axes), linear and/or rotational) of the floating device. Concepts may include controlling magnetic feedback. When the user touches, engages or interacts with the object, the user may receive a haptic sensation magnetically from the object (e.g. resistance, force feedback, virtual haptic (e.g. simulating a real life interaction, such as the pop of a button, or the detent of a mechanical element indexing when it is moved, etc.), vibration, motion, etc.), for example.

Concepts may include the possibility of sensing the object. It may be possible using both inside-out sensing (e.g. a sensor onboard the object such as an IMU) and/or outside-in sensing (e.g. a RGB or IR camera, radar, LIDAR, etc.). The system may enable sensing the user, e.g. by using sensor technologies (e.g. a RGB or IR camera, radar, LIDAR, etc.) to detect the user 35 (e.g. fingers, hand, arm, etc.) relative to the object. Further, proposed concepts may include analyzing (e.g. by combining the sensor data of the object and the user) and/or directly sensing the users interaction with the object (e.g. proximity, gesture, touch, manipulation (e.g. direct finger/hand manipulation of the object, such as touching, pushing/pulling, lifting, rotating, sliding) etc.).

Examples relate to a multisensory object (e.g. floating device 11) - e.g. providing lighting/illumination, ambient GUI (abstract/ambient display/GUI), interactive GUI (conventional pixel based GUI), sound, motion and haptic, thermal, etc. For example, multisensory integration with the vehicle systems (e.g. infotainment, entertainment, climate control, experience modes, driving modes, ambient lighting, seat and massage systems, window shades, scent dispenser, etc.) may be achieved. For example, integration with multi-modal interaction systems - e.g. Intelligent Personal System (IPA), voice, eye gaze/tracking, gesture, etc. may be achieved.

Examples relate to controlling a user interface of the vehicle (e.g. controlling a GUI (graphical user interface)/HMI (human machine interface)), features or functionality. The features/functions may be static or dynamic GUI elements depending on the context of the interaction, for example. Features may relate to conventional features (e.g. infotainment, climate control, vehicle modes, etc.) and novel features (e.g. sensory experiences, scent based experience, well-ness experiences, etc.). Electromagnetic levitation and motion control of the object (e.g. floating device) may be enabled. Sensing the object (e.g. floating device), e.g. position, motion, etc. may be enabled. Sensing the user - e.g. sensing touch, proximity, manipulation, user state, eye gaze, face recognition, emotion recognition (affective computing), biometrics, bio-signals, etc. may be enabled. Sensing the state of the car 20 and/or analyzing vehicle data (e.g. 3-dimensional motion (e.g. XYZ directions, cornering/turning, vibration, bumps, etc.), acceleration/deceleration, parked/static, forwards/reverse, etc.) may be enabled. Analyzing the combined data to determine the interaction between the user and the object may be possible. A feedback loop may be generated between the user and the object such that interactions between the user and the object are bidirectional (e.g. when the object is pushed by the user, the object can push back, depending on the context of the GUI function/feature), for example.

An example relates to an electromagnetic device to raise and lower an object (e.g. variable levitation) via controlled electromagnetic and/or electromechanical configuration/mechanism. Therefore, an electromagnetic approach may be supplemented or enhanced by an electromechanical actuator that moves the electromagnetic assembly, and/or the electromechanical motion may provide a greater distance of motion (e.g. compared to electromechanical).

The electromechanical motion may be in multiple axes, e.g. to move the object also backwards and forwards, e.g. in the cabin of a vehicle, and/or towards or away from the user(s), depending on the seating position/configuration (e.g. reclined or lay-flat seat position), for example.

Proposed concepts may enable to control the 3-dimensional position (linear and angular position, XYZ axes), and to provide a haptic feedback sensation when manipulated by the user (e.g. resistance, force, virtual haptic (e.g. sensation that feels physical, 3-dimensional, geometric, etc.), for example. The object may comprise multi-modal components - e.g. OLED touchscreen display, LED lighting, haptic actuator, sound, IMU (inertial measurement unit). The floating device 11 may be battery powered and/or wireless charged. The floating device 11 may have optical properties (e.g. opaque, transparent, semi-transparent, etc.). The object(s) (floating devices 11) may be interchangeable, replaceable, swappable, there may be more than one object (e.g. within one system 10), such that different floating devices 11 may activate different features/functionality or belong to different users (e.g. in a way similar to a wireless key or digital token).

The floating device 11 may provide a multisensory experience, e.g. enabled by: an OLED display, and/or touchscreen display, LEDs, audio speaker, haptic actuator, thermal device, etc. The floating device 11 may have onboard (inside-out) sensors that may allow the system to sense touch, proximity, manipulation, user state, eye gaze, etc. (e.g. capacitive or piezo touch surfaces, IMU to detect motion/acceleration, biometric/bio signal sensors (e.g. similar to those found on a smartwatch, e.g. optical sensors, ECG, GSR, etc.). The behavior of the floating device 11 may be coordinated with the electromagnetic (and/or electromechanical) functionality. The floating device 11 may be powered by a battery and/or be a wireless connection and/or wired connection (e.g. conductive electrical contacts).

Aspects relate to a user Experience / user Interaction that can be provided. The interaction with and around the floating device 11 may affect: a user interface (HMI/GUI) on the floating device 11 itself (e.g. an OLED display and/or touchscreen, LEDs, etc.); a HMI/GUI in the vehicle - e.g. integrated with typical vehicle systems; e.g. the interaction may control features such as: Infotainment, entertainment, climate control, experience modes, sensory modes, etc.; an HMI/GUI that is provided in addition to the standard HMI/GUI (e.g. of the vehicle) (i.e. the floating device 11 may unlock/enable optional, additional and/or customized (e.g. premium class) features that are not available on a standard vehicle, for example). Direct manipulation (e.g. touch, push/pull, turn/twist, tilt, etc.) of the floating device 11 may provide a user input to the user interface (e.g. GUI of the vehicle that comprises a display and/or VR (virtual reality) and/or AR (augmented reality) and/or digital projection based).

Interactions (e.g. proximity, hand gesture, eye gaze, face recognition, emotion recognition (affective computing), biometrics, biosignals, etc.) in the space surrounding the floating device 11 (but not necessarily touching the floating device 11) may provide a contextual interaction space depending on the state/mode of the GUI (e.g. display, projection, VR, AR, MR, etc.), for example. Interactions in the space and surrounding the floating device 11 and with the floating device 11 itself may be combined to create a continuous interaction (e.g. depending on the mode of the GUI, the users hand moving towards the floating device 11, touching the floating device 11 and pushing/pulling the floating device 11 might be recognized as a single or continuous gesture/interaction). The GUI interaction model may include a digital representation (e.g. photorealistic, abstract, artistic, etc.) of the object(s) and may be based on a physical interaction mental model that represents the real life degrees of freedom of the object(s), for example.

A proposed system may have dedicated sensors, e.g. external sensors (outside-in) that may be positioned in the vehicle (e.g. above, below, to the side of the floating device 11 and/or user) to monitor the user and/or floating device 11; e.g. a fusion of one or more sensor technologies (e.g. a RGB or IR camera, radar, LIDAR, magnetic sensor (e.g. hall effect), etc.); e.g. a fusion of external (outside-in) sensors and sensors mounted in the floating device 11 (e.g. sensors such as an IMU, capacitive touch, biometric, bio signal, etc.), for example.

The system 10 may be integrated with the vehicle 20 in a number of ways. It may be used to leverage vehicle data such as motion (e.g. forwards, reverse), driving mode, acceleration/deceleration, braking, cornering/turning, steering wheel 21 movement, vehicle direction, etc., for example. Vehicle data may be provided directly from the vehicle and/or crowd sourced from multiple vehicles (e.g. predicting vehicle dynamics relative to the road/map). Vehicle data may be used to control the motion and/or behavior of the system 10 (e.g. to compensate for vehicle motion and maintain the balance or stability of the floating device 11 when it is floating, raise/lower the floating device 11 depending on the speed of the vehicle, raise and lower the floating device 11 when the vehicle is locked/unlocked and/or when the door is open/closed, etc.), for example. The system 10 may function (e.g. respond, interact, display, feedback, etc.) in coordination with and/or control various vehicle functions and features - such as infotainment, entertainment, climate control, seat functionality, driving modes, experience modes, scent modes, etc., for example. The system 10 may function as a physical interaction point for physically interacting with an Intelligent Personal Assistant (IPA), for example, and as part of multi-modal interactions with the vehicle 20 (e.g. voice, touch, gaze, etc.), for example. The system 10 may leverage vehicle sensors that exist in the vehicle 20 for other purposes (e.g. microphone, light sensor, eye tracking, cameras (e.g. RGB, IR, etc.), for example. The system 10 may leverage existing systems such as ambient lighting, audio, displays, digital projectors, window shades, seating system, seat massage system, scent dispenser, etc., for example.

The multimodal interaction device (floating device 11) may be used in a vehicle 20, for example. Proposed concepts may be used generally in interactive products and devices (e.g. consumer products, entertainment products, etc.).

The aspects and features mentioned and described together with one or more of the previously detailed examples and figures, may as well be combined with one or more of the other examples in order to replace a like feature of the other example or in order to additionally introduce the feature to the other example.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example.

## Claims

1. A system (10) comprising:
a floating device (11) which is configured as at least one of an input device or an output device for a user interface;
a base element (12) for the floating device (11); and
a magnetic system,
wherein the system (10) is configured to maintain the floating device (11) in a balanced position above the base element (12) in a first operational mode, and
wherein the system (10) is configured to locate the floating device (11) in a docking position on a top side of the base element (12) in a second operational mode,
wherein locating the floating device (11) in the docking position comprises exerting a force on the floating device (11) so that it can be kept located in the docking position,
wherein the system (10) further comprises a fixing means configured for retaining or fixing the floating device (11) to the base element (12) in the docking position, wherein the fixing means comprises at least one of a mechanical fixing means having a mechanical click mechanism, and an electromechanical system,
wherein the magnetic system is configured to pull the floating device (11) from the balanced position into the docking position where it interacts with the mechanical click mechanism so that the floating device (11) can be fixed in the docking position.

2. The system (10) according to claim 1,
wherein the balanced position is a position in which a part of the floating device (11) is in physical contact with the base element (12) or in which the floating device (11) is levitating above the base element (12).

3. The system (10) according to claim 1 or claim 2, wherein the magnetic system is arranged in the base element (12) and the floating device (11), the system (10) further comprising
an electromechanical actuation unit (50),
wherein the magnetic system is configured to hold the floating device (11) in the balanced position,
wherein the magnetic system comprises at least one of a permanent magnet comprised in the floating device (11) or an electromagnetic coil (33) being positioned in the base element (12), and
wherein the electromechanical actuation (50) unit is configured to alter a position of at least one of the permanent magnet or the electromagnetic coil (33) within the base element (12).

4. The system (10) according to one of the previous claims,
wherein the system (10) is configured to levitate the floating device (11) in the balanced position within a range defined by a minimal distance of at least 1 mm and of at most 60 mm between the base element (12) and the floating device (11).

5. The system (10) according to one of the previous claims,
wherein the base element (12) comprises a mating element (34a) for the floating device (11) configured to receive the floating device (11) in the docking position, wherein the mating element (34a) and a bottom (34b) of the floating device (11) are designed to fit together positively.

6. The system (10) according to one of the previous claims,
wherein the system (10) is configured to measure at least one of a group of: a change of position of the floating device (11), a change of orientation, and a change of motion of the floating device (11) relative to the base element (12) for detection of a user input.

7. The system (10) according to one of the previous claims,
wherein the floating device (11) comprises at least one of a group of: a touch control element, a proximity sensor, an optical sensor, a sound sensor, a temperature sensor, a bio sensor, and an inertial measurement unit for detection of a user input.

8. The system (10) according to one of the previous claims,
wherein the floating device (11) comprises at least one of a group of: a display, a touchscreen display, a light source element, a speaker, a haptic actuator, and a thermal device for the provision of an output to a user.

9. The system (10) according to one of the previous claims, further comprising
an optical sensor (31) positioned separated from the floating device (11) and configured to detect a position and an orientation of the floating device (11) relative to the base element (12).

10. The system (10) according to one of the previous claims, further comprising
a wireless charging system configured to charge a battery of the floating device (11) at least in the docking position; or
a wireless energy transmission system configured to transmit electromagnetic energy from the base element (12) to the floating device (11) to operate the floating device (11).

11. The system (10) according to one of the previous claims,
wherein the system is configured to electromagnetically control a rotational movement of the floating device (11).

12. The system (10) according to one of the previous claims,
wherein the floating device (11) comprises:
a magnet element which is arranged circularly in the floating device (11); and
an output element (36),
wherein an upper portion of the floating device (11) is cone-shaped and the output element (36) is provided at the cone-shaped portion,
wherein the floating device (11) has a maximal height of at most 5 cm and a maximal diameter of at most 5 cm.

13. A vehicle (20) comprising a user interface and a system (10) according to one of the previous claims.

## Patentansprüche

1. System (10), umfassend:
eine Schwebevorrichtung (11), die als eine Eingabevorrichtung und/oder eine Ausgabevorrichtung für eine Benutzerschnittstelle ausgelegt ist;
ein Basiselement (12) für die Schwebevorrichtung (11); und
ein Magnetsystem,
wobei das System (10) dazu ausgelegt ist, die Schwebevorrichtung (11) in einem ersten Betriebsmodus in einer ausbalancierten Position über dem Basiselement (12) zu halten, und
wobei das System (10) dazu ausgelegt ist, die Schwebevorrichtung (11) in einem zweiten Betriebsmodus in einer Andockposition auf einer Oberseite des Basiselements (12) zu fixieren,
wobei das Fixieren der Schwebevorrichtung (11) in der Andockposition Ausüben einer Kraft auf die Schwebevorrichtung (11) umfasst, so dass sie in der Andockposition fixiert gehalten werden kann,
wobei das System (10) ferner ein Befestigungsmittel umfasst, das zum Zurückhalten oder Befestigen der Schwebevorrichtung (11) an dem Basiselement (12) in der Andockposition ausgelegt ist, wobei das Befestigungsmittel ein mechanisches Befestigungsmittel mit einem mechanischen Einrastmechanismus und/oder ein elektromechanisches System umfasst,
wobei das Magnetsystem dazu ausgelegt ist, die Schwebevorrichtung (11) aus der ausbalancierten Position in die Andockposition zu ziehen, in der sie mit dem mechanischen Einrastmechanismus zusammenwirkt, so dass die Schwebevorrichtung (11) in der Andockposition befestigt werden kann.

2. System (10) nach Anspruch 1,
wobei die ausbalancierte Position eine Position ist, in der ein Teil der Schwebevorrichtung (11) in physischem Kontakt mit dem Basiselement (12) steht oder in der die Schwebevorrichtung (11) über dem Basiselement (12) frei schwebt.

3. System (10) nach Anspruch 1 oder Anspruch 2, wobei das Magnetsystem in dem Basiselement (12) und der Schwebevorrichtung (11) angeordnet ist, wobei das System (10) ferner eine elektromechanische Betätigungseinheit (50) umfasst,
wobei das Magnetsystem dazu ausgelegt ist, die Schwebevorrichtung (11) in der ausbalancierten Position zu halten,
wobei das Magnetsystem einen Permanentmagneten, der in der Schwebevorrichtung (11) enthalten ist, und/oder eine elektromagnetische Spule (33), die in dem Basiselement (12) positioniert ist, umfasst, und
wobei die elektromechanische Betätigungseinheit (50) dazu ausgelegt ist, eine Position des Permanentmagneten und/oder der elektromagnetischen Spule (33) innerhalb des Basiselements (12) zu verändern.

4. System (10) nach einem der vorhergehenden Ansprüche, wobei das System (10) dazu ausgelegt ist, die Schwebevorrichtung (11) in der ausbalancierten Position innerhalb eines Bereichs frei schweben zu lassen, der durch einen minimalen Abstand von mindestens 1 mm und von höchstens 60 mm zwischen dem Basiselement (12) und der Schwebevorrichtung (11) definiert ist.

5. System (10) nach einem der vorhergehenden Ansprüche, wobei das Basiselement (12) ein Gegenelement (34a) für die Schwebevorrichtung (11) umfasst, das dazu ausgelegt ist, die Schwebevorrichtung (11) in der Andockposition aufzunehmen, wobei das Gegenelement (34a) und ein Boden (34b) der Schwebevorrichtung (11) so ausgestaltet sind, dass sie formschlüssig zusammenpassen.

6. System (10) nach einem der vorhergehenden Ansprüche, wobei das System (10) dazu ausgelegt ist, mindestens eines aus einer Gruppe von Folgendem zu messen: einer Änderung einer Position der Schwebevorrichtung (11), einer Änderung einer Ausrichtung und einer Änderung einer Bewegung der Schwebevorrichtung (11) relativ zu dem Basiselement (12) zur Detektion einer Benutzereingabe.

7. System (10) nach einem der vorhergehenden Ansprüche, wobei die Schwebevorrichtung (11) mindestens eines aus einer Gruppe von Folgendem umfasst: ein Berührungssteuerelement, einen Näherungssensor, einen optischen Sensor, einen Schallsensor, einen Temperatursensor, einen Biosensor und eine Trägheitsmesseinheit zur Detektion einer Benutzereingabe.

8. System (10) nach einem der vorhergehenden Ansprüche, wobei die Schwebevorrichtung (11) mindestens eines aus einer Gruppe von Folgendem umfasst: eine Anzeige, eine Berührungsanzeige, ein Lichtquellenelement, einen Lautsprecher, einen haptischen Aktuator und eine thermischen Vorrichtung zur Bereitstellung einer Ausgabe an einen Benutzer.

9. System (10) nach einem der vorhergehenden Ansprüche, ferner umfassend
einen optischen Sensor (31), der getrennt von der Schwebevorrichtung (11) positioniert und dazu ausgelegt ist, eine Position und eine Ausrichtung der Schwebevorrichtung (11) relativ zu dem Basiselement (12) zu detektieren.

10. System (10) nach einem der vorhergehenden Ansprüche, ferner umfassend
ein drahtloses Ladesystem, das dazu ausgelegt ist, eine Batterie der Schwebevorrichtung (11) zumindest in der Andockposition zu laden; oder
ein drahtloses Energieübertragungssystem, das dazu ausgelegt ist, elektromagnetische Energie von dem Basiselement (12) auf die Schwebevorrichtung (11) zu übertragen, um die Schwebevorrichtung (11) zu betreiben.

11. System (10) nach einem der vorhergehenden Ansprüche, wobei das System dazu ausgelegt ist, eine Drehbewegung der Schwebevorrichtung (11) elektromagnetisch zu steuern.

12. System (10) nach einem der vorhergehenden Ansprüche, wobei die Schwebevorrichtung (11) Folgendes umfasst:
ein Magnetelement, das kreisförmig in der Schwebevorrichtung (11) angeordnet ist; und
ein Ausgabeelement (36),
wobei ein oberer Abschnitt der Schwebevorrichtung (11) kegelförmig ist und das Ausgabeelement (36) an dem kegelförmigen Abschnitt bereitgestellt ist,
wobei die Schwebevorrichtung (11) eine maximale Höhe von höchstens 5 cm und einen maximalen Durchmesser von höchstens 5 cm aufweist.

13. Fahrzeug (20), das eine Benutzerschnittstelle und ein System (10) nach einem der vorhergehenden Ansprüche umfasst.

## Revendications

1. Système (10), comprenant :
un dispositif flottant (11) qui est configuré sous forme d'au moins un d'un dispositif d'entrée ou d'un dispositif de sortie pour une interface utilisateur ;
un élément de base (12) pour le dispositif flottant (11) ; et
un système magnétique,
dans lequel le système (10) est configuré pour maintenir le dispositif flottant (11) dans une position équilibrée au-dessus de l'élément de base (12) dans un premier mode de fonctionnement, et
dans lequel le système (10) est configuré pour placer le dispositif flottant (11) dans une position d'accueil sur un côté de dessus de l'élément de base (12) dans un second mode de fonctionnement,
dans lequel le placement du dispositif flottant (11) dans la position d'accueil comprend l'exercice d'une force sur le dispositif flottant (11) de telle sorte qu'il peut être maintenu placé dans la position d'accueil,
dans lequel le système (10) comprend en outre un moyen de fixation configuré pour retenir ou fixer le dispositif flottant (11) à l'élément de base (12) dans la position d'accueil, dans lequel le moyen de fixation comprend au moins un d'un moyen de fixation mécanique ayant un mécanisme de déclic mécanique, et d'un système électromécanique,
dans lequel le système magnétique est configuré pour tirer le dispositif flottant (11), depuis la position équilibrée, dans la position d'accueil où il interagit avec le mécanisme de déclic mécanique de telle sorte que le dispositif flottant (11) puisse être fixé dans la position d'accueil.

2. Système (10) selon la revendication 1,
dans lequel la position équilibrée est une position dans laquelle une partie du dispositif flottant (11) est en contact physique avec l'élément de base (12) ou dans laquelle le dispositif flottant (11) est en lévitation au-dessus de l'élément de base (12).

3. Système (10) selon la revendication 1 ou la revendication 2, dans lequel le système magnétique est agencé dans l'élément de base (12) et le dispositif flottant (11), le système (10) comprenant en outre une unité d'actionnement électromécanique (50),
dans lequel le système magnétique est configuré pour maintenir le dispositif flottant (11) dans la position équilibrée,
dans lequel le système magnétique comprend au moins un d'un aimant permanent, compris dans le dispositif flottant (11), ou d'une bobine électromagnétique (33), positionné dans l'élément de base (12), et
dans lequel l'unité d'actionnement électromécanique (50) est configurée pour modifier une position d'au moins un de l'aimant permanent ou de la bobine électromagnétique (33) à l'intérieur de l'élément de base (12).

4. Système (10) selon l'une des revendications précédentes,
dans lequel le système (10) est configuré pour faire léviter le dispositif flottant (11) dans la position équilibrée dans les limites d'une plage définie par une distance minimale d'au moins 1 mm et d'au plus 60 mm entre l'élément de base (12) et le dispositif flottant (11).

5. Système (10) selon l'une des revendications précédentes,
dans lequel l'élément de base (12) comprend un élément d'accouplement (34a) pour le dispositif flottant (11) configuré pour recevoir le dispositif flottant (11) dans la position d'accueil, dans lequel l'élément d'accouplement (34a) et un fond (34b) du dispositif flottant (11) sont conçus pour s'ajuster ensemble positivement.

6. Système (10) selon l'une des revendications précédentes,
dans lequel le système (10) est configuré pour mesurer au moins un d'un groupe de : un changement de position du dispositif flottant (11), un changement d'orientation, et un changement de mouvement du dispositif flottant (11) relativement à l'élément de base (12) pour détection d'une entrée utilisateur.

7. Système (10) selon l'une des revendications précédentes,
dans lequel le dispositif flottant (11) comprend au moins un d'un groupe de : un élément de commande tactile, un capteur de proximité, un capteur optique, un capteur de son, un capteur de température, un biocapteur, et une unité de mesure inertielle pour détection d'une entrée utilisateur.

8. Système (10) selon l'une des revendications précédentes,
dans lequel le dispositif flottant (11) comprend au moins un d'un groupe de : un organe d'affichage, un organe d'affichage à écran tactile, un élément source de lumière, un haut-parleur, un actionneur haptique, et un dispositif thermique pour la fourniture d'une sortie à un utilisateur.

9. Système (10) selon l'une des revendications précédentes, comprenant en outre
un capteur optique (31) positionné de façon séparée du dispositif flottant (11) et configuré pour détecter une position et une orientation du dispositif flottant (11) relativement à l'élément de base (12).

10. Système (10) selon l'une des revendications précédentes, comprenant en outre
un système de charge sans fil configuré pour charger une batterie du dispositif flottant (11) au moins dans la position d'accueil ; ou
un système de transmission d'énergie sans fil configuré pour transmettre de l'énergie électromagnétique depuis l'élément de base (12) au dispositif flottant (11) pour faire fonctionner le dispositif flottant (11).

11. Système (10) selon l'une des revendications précédentes,
dans lequel le système est configuré pour commander électromagnétiquement un mouvement de rotation du dispositif flottant (11).

12. Système (10) selon l'une des revendications précédentes,
dans lequel le dispositif flottant (11) comprend :
un élément aimant qui est agencé de façon circulaire dans le dispositif flottant (11) ; et
un élément de sortie (36),
dans lequel une portion supérieure du dispositif flottant (11) est en forme de cône et l'élément de sortie (36) est prévu au niveau de la portion en forme de cône,
dans lequel le dispositif flottant (11) a une hauteur maximale d'au plus 5 cm et un diamètre maximal d'au plus 5 cm.

13. Véhicule (20), comprenant une interface utilisateur et un système (10) selon l'une des revendications précédentes.
